# EUROPEAN PATENT APPLICATION

(11) **EP 2 511 830 A1**
(43) Date of publication of application: **17.10.2012**
(21) Application number: 10857278.5
(22) Date of filing: 17.09.2010
(51) Int. Cl.: G06F 15/00

(54) **INFORMATION PROCESSING DEVICE**

(71) Applicant: Kabushiki Kaisha Toshiba, Minato-ku Tokyo 105-8001 (JP)
(72) Inventor: AJITOMI, Daisuke, Tokyo 105-8001 (JP); ISE, Kotaro, Tokyo 105-8001 (JP)
(74) Representative: HOFFMANN EITLE
(86) International application number: PCT/JP2010/066165
(87) International publication number: WO 2012/035644

(57) **Abstract**

An information processing apparatus stores user information including user attribute information, and stores accessibility information, which indicates whether a use of the user attribute information is allowed or not, for each piece of user attribute information and each attribute value that is a value of the user attribute information. The information processing apparatus receives, from a server apparatus, a first program that is for access to the user information by a unified process, analyzes the first program so as to extract the user attribute information to be used, and determines whether the use of the attribute value of the user attribute information is allowed or not by using the accessibility information of the extracted user attribute information. When the determination result is negative, the information processing apparatus does not execute all or some of the first program so as to deny access to the attribute value of the user attribute information from the first program, but when the determination is positive, the information processing apparatus executes the first program so as to allow access to the attribute value of the user attribute information from the first program.

## Description

### Field

The present invention relates to an information processing apparatus.

### Background

There has conventionally been a technique of providing user information, which is accumulated in an information processing apparatus such as a PC (Personal Computer, a cellular phone, and an AV device having a communication function, to a service provider utilizing communication infrastructure. Examples of the user information includes attribute information of the information processing apparatus used by a user, personal information of a user, and operation history information indicating a history of an operation input of a user to the information processing apparatus. In this technique, there is a technique of specifying an interface (Geolocation API) that transmits current position information, indicating a current position of the information processing apparatus by latitude and longitude, to a server apparatus of a service provider through a Web browser (see Non Patent Literature 1). In the technique in Non Patent Literature 1, when the information processing apparatus receives an HTML text having Geolocation API buried therein, the information processing apparatus reports a disclosure requirement of the current position information to the user by the API, and allows the user to select whether the disclosure of the current position information can be allowed or not, thereby controlling access to the current position information.

### Citation List

### Non Patent Literature

Non Patent Literature 1: W3C Geolocation API Specification Editor's Draft 30 June 2009 http://dev.w3.org/geo/api/spec-source.html Summary

### Technical Problem

However, in the technique in Non Patent Literature 1, it is difficult to control the access according to the value of information that is a target of the access, such as the case in which the current position information is not disclosed when a user is at home, for example. For example, when the technique in the Non Patent Literature 1 is applied to the technique of providing the user information accumulated in the above-mentioned information processing apparatus to the service provider, it is difficult to control the access according to the value of the user information in response to the request of use of the user information from the service provider.

The present invention has been made in view of the above-mentioned circumstance, and an object of the invention is to provide an information processing apparatus that can control access according to the disclosure in response to the request of use of the user information from the server apparatus on the basis of the value of the user information.

### Solution to Problem

To solve the problems described above and achieve the object, the present invention provides an information processing apparatus that includes a first storage to store user information containing a plurality of pieces of user attribute information; a receiving unit configured to receive a first program, which is used for access to the user information by a unified process, from a server apparatus; a first analyzing unit configured to analyze the received first program, and extract the user attribute information that is to be used; a second storage unit to store accessibility information, indicating whether the access to the user attribute information is allowed or not, for each piece of the user attribute information and each attribute value that is a value of the user attribute information; a determining unit configured to determine whether the use of the attribute value of the user attribute information is allowed or not by using the accessibility information of the extracted user attribute information; an executing unit configured to execute the first program according to the result of the determination of the determining unit; and an execution controller configured not to allow the executing unit to execute all or some of the first program so as to deny access to the attribute value of the user attribute information from the first program when it is determined that the use of the attribute value of the user attribute information is not allowed, but to allow the executing unit to execute the first program so as to allow the access to the attribute value of the user attribute information when it is determined that the use of the attribute value of the user attribute information is allowed.

### Advantageous Effects of Invention

The present invention can control access according to the disclosure in response to the request of use of the user information from the server apparatus on the basis of the value of the user information.

### Brief Description of Drawings

FIG. 1 is a diagram illustrating a configuration of an information processing system according to a first embodiment.
FIG. 2 is a view illustrating user information.
FIG. 3 is a view illustrating a part of a description of a user information application program.
FIG. 4 is a view illustrating filter information.
FIG. 5 is a flowchart illustrating a procedure of a content display process.
FIG. 6 is a view illustrating filter information according to a second embodiment.
FIG. 7 is a view illustrating operation history information.
FIG. 8 is a view illustrating a part of a description of a user information application program.
FIG. 9 is a flowchart illustrating a procedure of a content display process.
FIG. 10 is a diagram illustrating a configuration of an information processing system according to a third embodiment.
FIG. 11 is a view illustrating content-related information.
FIG. 12 is a view illustrating a part of a description of a user information application program.
FIG. 13 is a view illustrating XML data described on the fifth line in FIG. 12.
FIG. 14 is a view illustrating filter information.
FIG. 15 is a flowchart illustrating a procedure of a content display process.
FIG. 16 is a flowchart illustrating a procedure of a content display process.
FIG. 17 is a diagram illustrating a configuration of an information processing system according to a fourth embodiment.
FIG. 18 is a view illustrating XML data described on the fifth line in FIG. 12.
FIG. 19 is a diagram illustrating a configuration of an information processing system according to a fifth embodiment.
FIG. 20 is a view illustrating preference information.
FIG. 21 is a flowchart illustrating a procedure of a content display process.

### Description of Embodiments

An information processing apparatus according to one embodiment of the present invention will be described in detail below with reference to the attached drawings.

### [First embodiment]

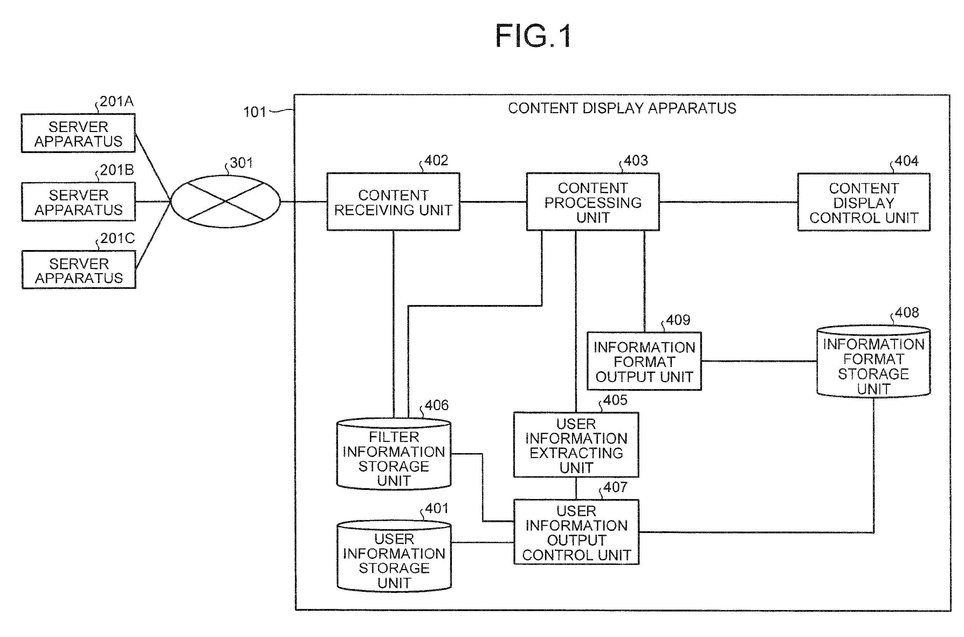

FIG. 1 is a diagram illustrating a configuration of an information processing system including a content display apparatus 101 serving as the information processing apparatus according to this embodiment, and a functional configuration of the content display apparatus 101. The information processing system includes the content display apparatus 101, and server apparatuses 201A, 201B, and 201C operated by a service provider. The content display apparatus 101 and the server apparatuses 201A and 201B are connected through a network 301. The network 301 is, for example, LAN (Local Area Network), intranet, Ethernet (registered trademark), the Internet, WAN (Wide Area Network), quality assurance closed network NGN (Next Generation Network), or digital terrestrial broadcasting network. When the server apparatuses 201A, 201B, and 201C are not necessarily distinguished, they are simply referred to as a server apparatus 201. The server apparatus 201 can be connected to the network 301 in addition to the server apparatuses 201A, 201B, and 201C.

A hardware structure of the content display apparatus 101 according to this embodiment will next be described. The content display apparatus 101 according to this embodiment includes a control unit that controls the whole apparatus, such as a CPU (Central Processing Unit), a main storage unit for storing various types of data and various programs, such as ROM (Read Only Memory) or RAM (Random Access Memory), an auxiliary storage unit such as an HDD (Hard Disk Drive) for storing various types of data and various programs such as content, and a bus that interconnects these components. Specifically, the content display apparatus 101 has a general hardware structure utilizing a computer. The content display apparatus 101 includes a display unit that displays information, an operation input unit such as a keyboard, mouse, or remote controller, that accepts an instruction input of a user, and a communication I/F (Interface) that controls communication with an external apparatus such as the server apparatus 201. These units are interconnected with wired or wireless connection. The communication with the server apparatus 201 is established through the network 301. The content display apparatus 101 can be realized by a personal computer, digital television, hard disk recorder, STB (Set Top Box), or mobile device such as a cellular phone, for example. The display unit is a display such as liquid crystal that can be mounted to these devices, and displays a screen generated by the execution of Internet browser application (program), for example. The content display apparatus 101 can also be provided with various sensors such as a biometric authentication sensor that detects fingerprints, a sensor that detects a current position, or an acceleration sensor that detects acceleration.

The hardware structure of the server apparatus 201 is almost equal to that of the content display apparatus 101, and it is a general hardware structure utilizing a computer. The server apparatus 201 is, for example, a server apparatus operated by a major portal site such as Yahoo! (registered trademark), sales site such as Amazon (registered trademark), video-sharing site such as YouTube (registered trademark), information site such as GURUNAVI (registered trademark), SNS (Social Network Service) site such as mixi (registered trademark), or IPTV service site such as Hikari TV (registered trademark), or a transmission device of digital terrestrial broadcasting.

Various functions realized through the execution of various programs, stored in the main storage unit or the auxiliary storage unit, by the CPU of the content display apparatus 101 in the above-mentioned hardware structure will next be described with reference to FIG. 1. The content display apparatus 101 includes a user information storage unit 401, a content receiving unit 402, a content processing unit 403, a content display control unit 404, a user information extracting unit 405, a filter information storage unit 406, a user information output control unit 407, an information format storage unit 408, and an information format output unit 409. The content receiving unit 402, the content processing unit 403, the user information extracting unit 405, the user information output control unit 407, and the information format output unit 409 are formed on the main storage unit such as the RAM during the execution of the program by the CPU. The user information storage unit 401, the filter information storage unit 406, and the information format storage unit 408 are a database management system constructed on the main storage unit or the auxiliary storage unit, for example. The database management system may be an XML (extensible Markup Language) database or a relational database. The system does not have to be constructed by a single database management system. Plural database management systems, e.g., SQLite3, Oracle, MySQL, may be used together. The system may be constructed on a single physical storage unit, or may be constructed on plural physical auxiliary storage units such as NAS (Network Attached Storage) or SAN (Storage Area Network). The user information storage unit 401, the filter information storage unit 406, and the information format storage unit 408 may be composed of a file group such as a mere CSV format, or Key/Value Store, not of a database management system, so long as they have a unit capable of acquiring unit information (entry) that is data stored in each storage unit.

The user information storage unit 401 stores therein user information. The user information includes a plurality of pieces of user attribute information relating to an attribute of the user. For example, the user information can contain user's personal information (e.g., name, age, address, sex, career, hobby, credit card information, etc.), and a history (operation history information) of operation history information indicating the content of the operation input by the user on the content display apparatus 101. In a case where the content display apparatus 101 is provided with a sensor, the user information can contain information (e.g., information indicating a current position, information indicating acceleration, information of fingerprint, etc.) that can be detected by the sensor. The user information can also contain apparatus attribute information (lot number, product name, etc.) of the content display apparatus 101. The user information does not have to contain the user attribute information described above, and may contain various personal information that is not described here. In this embodiment, the user information storage unit 401 may be an XML database that manages the user information expressed by XML (extensible Markup Language). In this embodiment, the user information storage unit 401 is supposed to store therein the user information, expressed by the XML, as an XML document file.

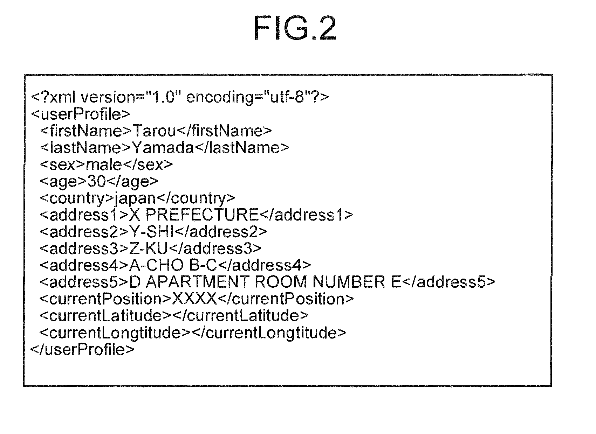

FIG. 2 is a view illustrating the user information. FIG. 2 illustrates the above-mentioned personal information. Each of tags <firstName>, <lastName>, <sex>, <age>, ... <currentPosition>, ... between a tag <userProfile> and a tag </userProfile> indicates a user attribute name ("first name", "last name", "sex", "age", "current position", etc.) that is the name assigned to the user attribute information. A value illustrated between the tags indicates an attribute value that is the value indicated by the user attribute information. For example, as for the "first name", the attribute value is indicated as "Tarou". As for the "current position", longitude information and latitude information are indicated as a coordinate of the current position. The content display apparatus 101 acquires the longitude information and latitude information by the GPS (Global Positioning System) function as needed, and allows the user information storage unit 401 to store the information. As described above, the user information containing a plurality of pieces of user attribute information is stored in the user information storage unit 401 for each user.

The content receiving unit 402 receives content containing a later-described user information application program from the server apparatus 201 through the network 301. The content described here may be an HTML (Hypertext Markup Language) document displayed through Internet browser, or multimedia content, such as a video image, image, music, or book, associated with the HTML document. In this embodiment, the content receiving unit 402 is supposed to be an HTTP client utilized by Internet browser application represented by IE (Internet Explorer), Firefox, or Opera. In this case, the user information application program is buried in the HTML (Hypertext Markup Language) document, which is the content, as JavaScript program. The content receiving unit 402 transmits the user information application program buried in the content to the user information extracting unit 405.

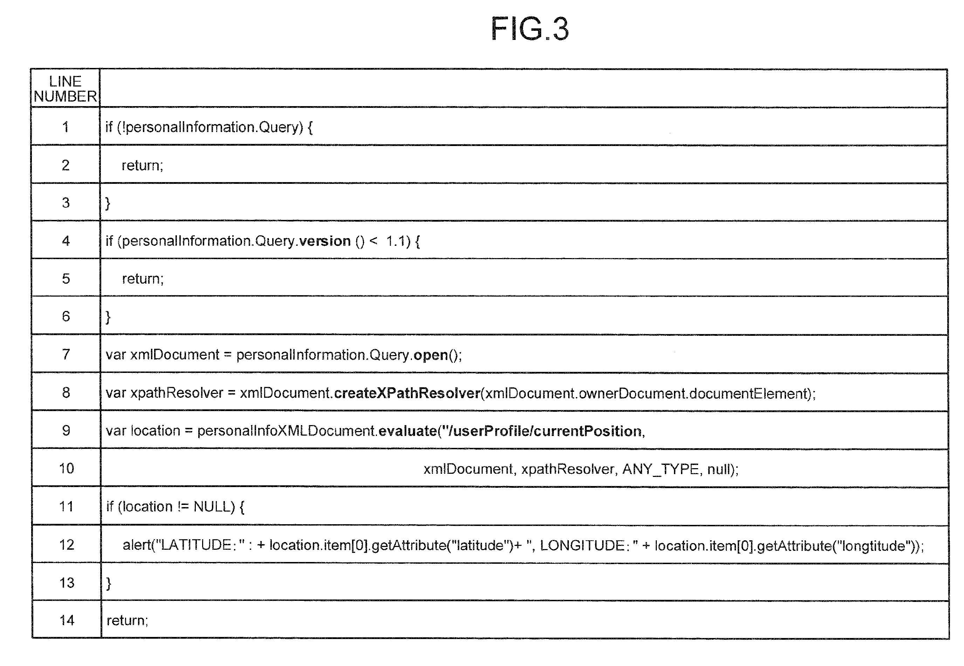

FIG. 3 is a view illustrating a part of the description of the user information application program. In FIG. 3, the user information application program utilizes the user attribute information indicating the current position (userProfile/currentPosition) from the user information (see FIG. 2) stored in the user information storage unit 401. As illustrated in FIG. 3, when this user information application program is executed by the CPU, the functions described below can be realized. The CPU firstly checkes whether an access API to the user information application program can be utilized or not. If the API cannot be utilized, the CPU ends the process (the first line to the third line). If the API can be utilized, the CPU then checks a version of a description format of the user information. If the version of the description format of the user information does not satisfy a condition, the CPU ends the process (the fourth line to the sixth line). When the version of the description format of the user information satisfies the condition, the CPU generates an object for handling the user information as the XML document (the seventh line), and generates XPath handler associated with this XML document (eighth line). Then, the CPU acquires the user attribute information indicating the current position (/userProfile/currentPosition) contained in the user information by utilizing the XPath (the ninth and tenth lines). When the CPU can acquire the information, it allows the display unit to display the coordinate of the current position in a pop-up manner (the twelfth line). This user information application program only displays the coordinate of the current position. However, there can be a user information application program that can realize a function of providing a nearby restaurant or sightseeing spot, or near station according to the current position.

The user information extracting unit 405 analyzes the user information application program sent from the content receiving unit 402 so as to extract the user attribute information utilized during the execution of the user information application program. The user information application program is a program by which the user information stored in the content display apparatus 101 is accessed by a unified process. The description for accessing to the user information in the user information application program is made by using a common API (Application Programming Interface). For example, XPath or XQuery is used as the common API for making access to the user information. The common description format of the user information is an XML format in which the same schema is shared between the content display apparatus 101 and the server apparatus 201. The common description format and the common API are not limited to those described in this embodiment. The common description format may be expressed as JSON (JavaScript Object Notation) that is an object representation of JavaScript. The common API for making access to the user information may be the one utilizing SQL (Structured Query Language). The user information extracting unit 405 analyzes the user information application program described above, and executes the user information application program, thereby extracting the user attribute information that is a target to be accessed. The user information extracting unit 405 described above is a software module bound to the content processing unit 403 that functions as JavaScript analyzing/executing unit.

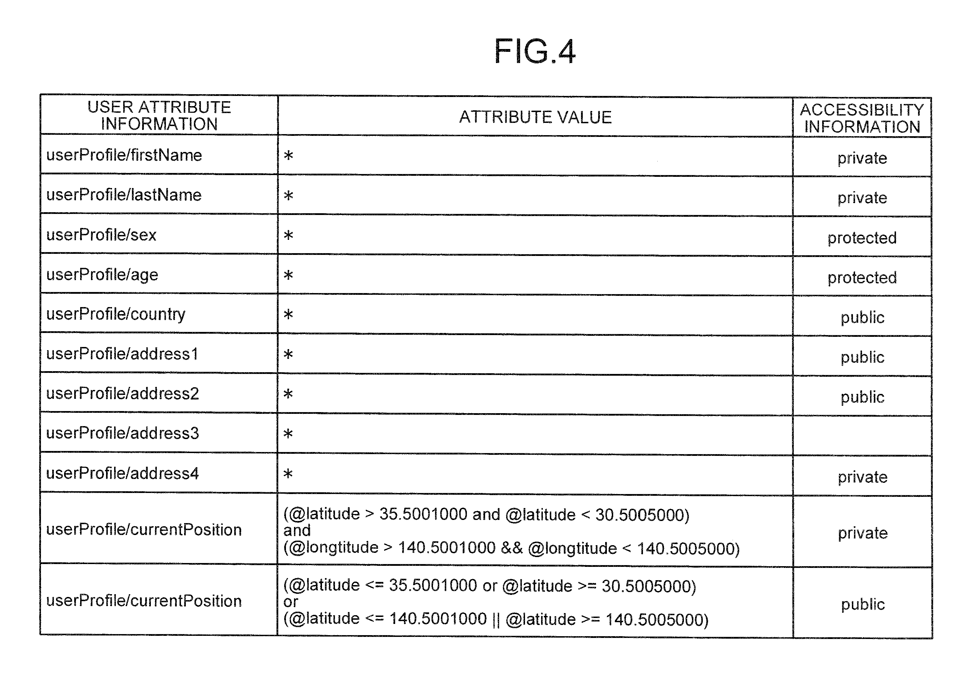

The filter information storage unit 406 stores therein filter information indicating whether the use of each of the attribute values of each user attribute information by the execution of the user information application program is allowed or not. FIG. 4 is a view illustrating the filter information. As illustrated in FIG. 4, the filter information is constructed as being associated with accessibility information indicating any one of disclosure levels, which are "public", "protected", and "private" for each user attribute information and the attribute value thereof. The "public" means that the transmission is allowed. The "protected" means that the reference is allowed, but the transmission is inhibited, and the information is only used in the content display apparatus 101. For example, the accessibility information for the latitude information (userProfile/currentPosition/@latitude) and longitude information (userProfile/currentPosition/@long titude) is set as "private" for access to a certain section (see the eleventh line), and set as "public" to access to the other sections (see the twelfth line) as the attribute value. For example, the filter information described above is set by the setting in which "the user attribute information indicating the current position is not disclosed when the user is at home or neighborhood". As described above, in this embodiment, the disclosure level can be different for the attribute value of the user attribute information. The disclosure level is not limited to the above-mentioned three levels. The disclosure level may be two that are public and private. A wild card (*) can be designated for the attribute value composing the filter information. The case where the wild card is designated means that the designated accessibility information is applied for all values that can be the attribute value.

The user information output control unit 407 determines whether the user information application program contained in the content received by the content receiving unit 402 can be executed or not based upon the filter information stored in the filter information storage unit 406 and the attribute value of the user attribute information extracted by the user information extracting unit 405. Specifically, when the filter information indicates that the usage of the attribute value of the user attribute information utilized through the execution of the user information reception program is not allowed, the user information output control unit 407 does not transmit the user information application program to the content processing unit 403 in order to deny access to the user attribute information from the user information application program. When the filter information indicates that the usage is allowed, the user information output control unit 407 outputs the user attribute information, and sends the user information application program to the content processing unit 403 in order to permit access to the user attribute information from the user information application program. In this embodiment, the user information output control unit 407 is supposed to be a software module bound to the content processing unit 403, like the user information extracting unit 405.

The information format storage unit 408 stores therein format information indicating the schema of the user information and revision information indicating a version of the schema, as the description format of the user information stored in the user information storage unit 401. The schema is an XML schema, for example, and is a table schema of a relational database. For example, the format information indicating the XML schema of the user information illustrated in FIG. 2 and the revision information indicating the version number of the XML schema are stored in the information format output unit 409.

The information format output unit 409 outputs the format information and revision information stored in the information format storage unit 408 according to a request by the user information application program.

The content processing unit 403 executes the user information application program transmitted from the user information output control unit 407, decodes the content received by the content receiving unit 402, and transmits the decoded content to the content display control unit 404. Specifically, when the network 301 is the Internet or NGN, the content processing unit 403 is an analyzing/executing unit that analyzes and executes an HTML parser/renderer and JavaScript. When the network 301 is a broadcasting network such as digital terrestrial broadcasting, BS, or CS, the content processing unit 403 is an analyzing/executing unit that analyzes and executes an MPEG-2 decoder, as well as BML parser/renderer and ECMAScript. The content processing unit 403 is not limited to the system described above. In this embodiment, the content processing unit 403 is supposed to be the analyzing/executing unit that analyzes and executes an HTML parser/renderer and JavaScript. Specifically, it is a core function of the Internet browser application.

The content display control unit 404 is a display control unit that allows the display unit to display the content decoded by the content processing unit 403.

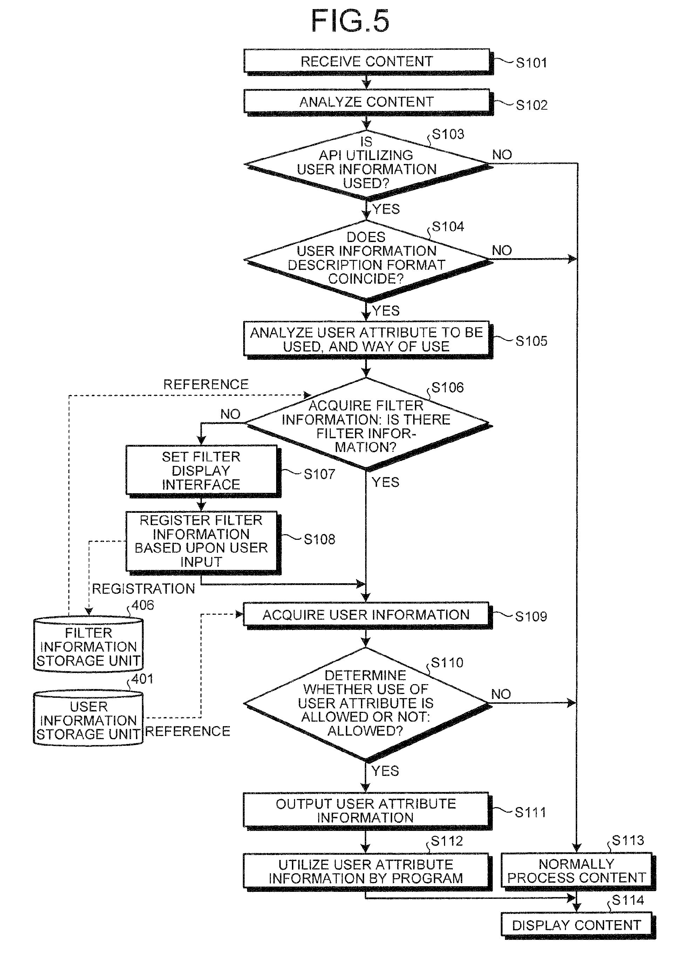

Next, the procedure of the content display process executed by the content display apparatus 101 according to this embodiment will be described with reference to FIG. 5. It is supposed that, in the description below, the user information illustrated in FIG. 2, the user information application program illustrated in FIG. 3, and the filter information illustrated in FIG. 4 are used. It is also supposed that the common API is the XPath. The content display apparatus 101 firstly receives the content from the server apparatus 201 by the function of the content receiving unit 402 (step S101). The received content has the user information application program illustrated in FIG. 3 buried therein. The content display apparatus 101 then analyzes the content received in step S101 by the function of the content processing unit 403 (step S102) so as to determine whether JavaScript program buried in the content calls the access API to the user information or not, i.e., whether it is the user information application program or not (step S103). In this embodiment, the content display apparatus 101 makes determination by determining whether a query of "personal Information.Query" is called or not on the first line in FIG. 3. If the content display apparatus 101 determines that the access API is not called (step S103: NO), the user information is not utilized, so that the content display apparatus 101 decodes the content received in step S101 (step S113), and allows the display unit to display the decoded content by the function of the content display control unit 404 (step S114).

On the other hand, the content display apparatus 101 determines that the access API is called (step S103: YES), the content display apparatus 101 outputs the version number (revision information of the format information) of the XML schema, which is the description format of the user information (see FIG. 2), from the information format storage unit 409 by using the function of the information format output unit 409 based upon the call of persionalInformatin.Query.version() on the fourth line in FIG. 3. The content display apparatus 101 determines whether or not the version number coincides with a version requested by the user information application program by the function of the content processing unit 403 (step S104). It is supposed, for example, that the version number of the XML schema stored in the information format storage unit 409 is "1.2". When the version number requested by the user information application program is "1.1" or higher, the content display apparatus 101 determines that the version number satisfies the version condition by the function of the content processing unit 403 (step S104: YES), so that it proceeds to step S105. When the version number does not satisfy the version condition (step S104: NO), the content display apparatus 101 does not permit the usage of the user information, and executes the processes in steps S113 and S114.

In step S105, the function of the user information extracting unit 405 is called out by the content processing unit 403. The content display apparatus 101 analyzes the XPath (see the ninth line in FIG. 3) of the user information application program by the called function so as to detect that the user information application program utilizes the user attribute information indicating the current position contained in the user information, thereby extracting the user attribute information. The content display apparatus 101 also detects that the user attribute information is not transmitted to the server apparatus 201 (see the twelfth line in FIG. 3). Then, the content display apparatus 101 determines whether the filter information (see FIG. 4) related to the user attribute information, indicating the current position and extracted in step S105, is stored in the filter information storage unit 406 or not by the function of the user information output control unit 407 (step S106). When the filter information is stored (step S106: YES), the content display apparatus 101 reads the filter information from the filter information storage unit 406. Then, the content display apparatus 101 reads the user attribute information indicating the current position from the user information storage unit 401 (step S109), and determines whether use of the attribute value of the user attribute information is allowed or not in the user information application program by using the filter information (step S110). The value (attribute value) of the longitude and latitude of the current position indicated by the user attribute information acquired in step S109 falls within the section (see the eleventh line in FIG. 4) to which the "private" is set as indicated by the filter information. In this case (step S110: NO), the content display apparatus 101 denies the access to the attribute value of the user attribute information from the user information application program, thereby executing the processes in steps S113 and S114 without outputting the user attribute information. In this case, the content display apparatus 101 may allow the display unit to display a message indicating that the access to the attribute value of the user attribute information is denied.

On the other hand, when the longitude and latitude of the current position indicated by the user attribute information acquired in step S109 falls within the section (see twelfth line in FIG. 4) to which the "public" is set as indicated by the filter information, the content display apparatus 101 determines that the access to the attribute value of the user attribute information from the user information application program is allowed (step S110: YES), thereby outputting the user attribute information (step S111). The content display apparatus 101 then decodes the content received in step S101, and executes the user information application program. The content display apparatus 101 then converts the coordinate of the current position into a character string, and allows the display unit to display the resultant in a pop-up manner (step S112) as the process of utilizing the attribute value of the user attribute information output in step S111. Then, the content display apparatus 101 executes the process in step S114.

When the content display apparatus 101 determines that the access to the attribute value of the user attribute information from the user information application program is denied by using the filter information (step S110: NO), it executes the processes in steps S113 and S114. When the filter information (see FIG. 4) related to the user attribute information indicating the current position and extracted in step S105 is not stored in the filter information storage unit 406 (step S106: NO), the content display apparatus 101 allows the display unit to display a user interface screen for letting the user to determine whether the use of the attribute value of the user attribute information is allowed or not in the user information application program (step S107). The content display apparatus 101 generates the filter information involved with the user attribute information indicating the current position according to the operation input of the user through the operation input unit on the user interface screen, and stores the resultant into the filter information storage unit 406 (step S108).

As described above, according to this embodiment, not only the content display apparatus 101 can control the access to each user attribute information and its attribute value according to the disclosure level with respect to the request of using the user information from the server apparatus 201 of the service provider, but also the service provider can realize various services as flexibly changing the way of using the user information within the disclosure level of the user information.

In the Geolocation API described as the background art, it is difficult to control access according to a value of information that is a target to be accessed. However, the content display apparatus 101 according to this embodiment can control access according to the attribute value that is the value of the user attribute information, which is the target to be accessed.

### [Second embodiment]

An information processing apparatus according to a second embodiment will next be described. The components same as those in the first embodiment are identified by the same numerals for description, or the description is not repeated.

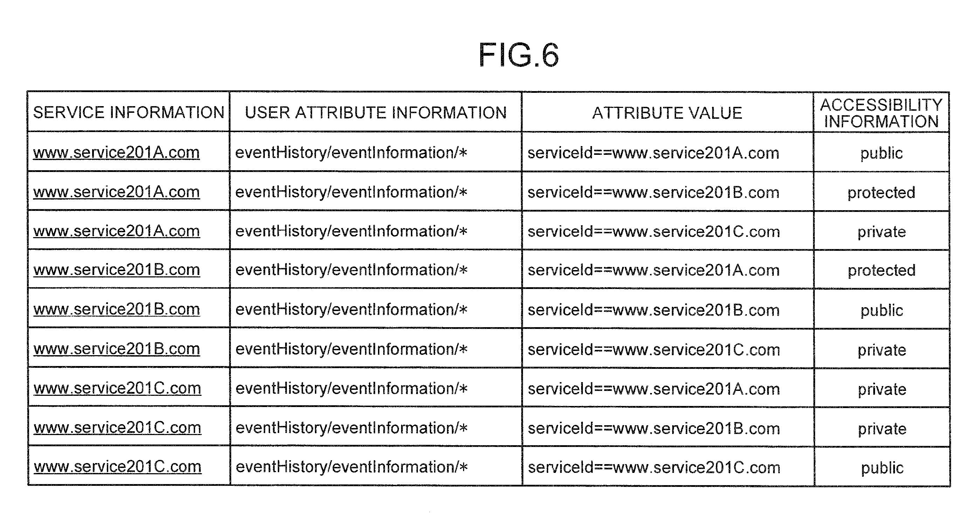

This embodiment handles filter information that can be set for each service provider as the filter information. FIG. 6 is a view illustrating the filter information according to this embodiment. Service information that is an identifier for identifying each of plural server apparatuses 201 is assigned to each of the plural server apparatuses 201 connected to the network 301. The service information is, for example, a URL (Uniform Resource Locator) assigned to each server apparatus 201. For example, service information "www.service201A.com" is assigned to the server apparatus 201A, service information "www.service201B.com" is assigned to the server apparatus 201B, and service information "www.service201C.com" is assigned to the server apparatus 201C. FIG. 6 illustrates that the disclosure level of each attribute value of certain attribute information is set for each service information, and the accessibility information is associated. The user attribute information is, for example, operation history information indicating the operation input to the content.

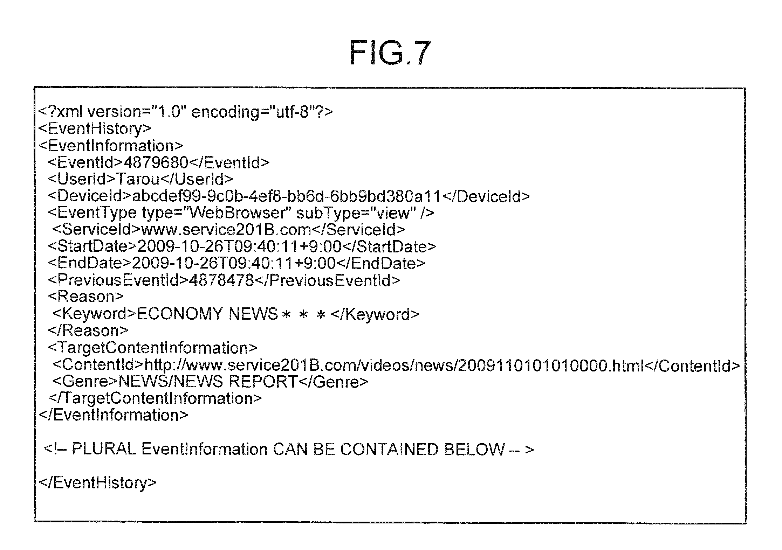

FIG. 7 is a view illustrating the operation history information. The operation history information illustrated in FIG. 6 indicates that the operation to the content is "viewing" (see the seventh line), indicates that the apparatus receiving the content is the server apparatus 201B (see eighth line), indicates the start time and end time of the "viewing operation" (see ninth to tenth lines), indicates a keyword related to the content (see the thirteenth line), and indicates a content ID assigned to the content (see the sixteenth line). The operation history information described above is stored in the user information storage unit 401 as the user information through an execution of an operation history information acquiring program during the reading of the content. The operation history information acquiring program is a JavaScript program that catches the operation input to the content as an input event, generates the operation history information indicating what is done by the operation input, and stores the generated operation history information to the user information storage unit 401. The operation history information acquiring program may be prepared for each site of the server apparatus 201, and the operation history information may be acquired from the plural server apparatuses 201 as the user attribute information.

Returning to FIG. 6, in the filter information in FIG. 6, the disclosure level of the operation history information is set to the server apparatus 201, which transmits the user information application program requesting to use the operation history information together with the content, according to the server apparatus 201 that receives the content indicated by the operation history information.

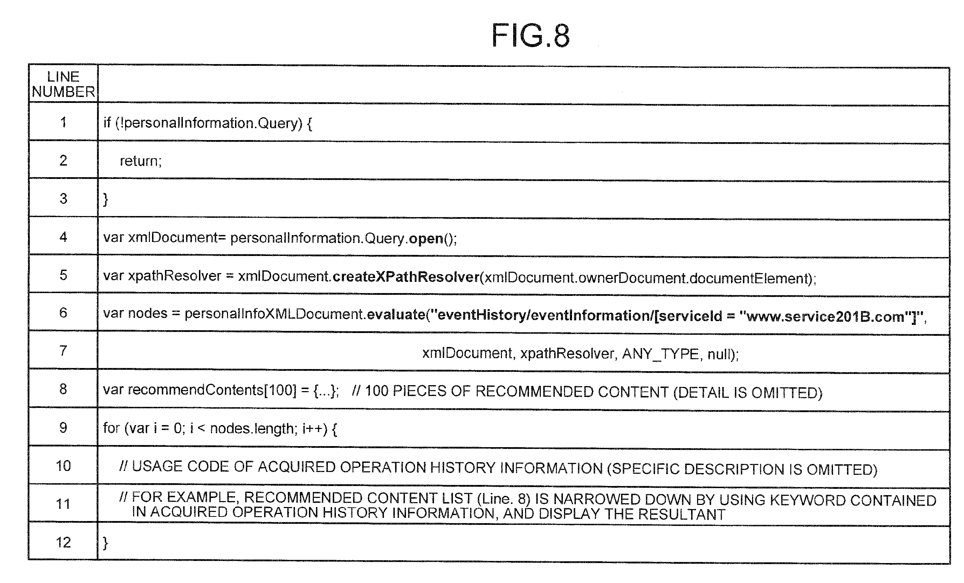

FIG. 8 is a view illustrating a part of the description of the user information application program. The user information application program illustrated in FIG. 8 is different from the user information application program illustrated in FIG. 3 in that an acquisition condition is set to the XPath. Specifically, the XPath written on the sixth line in FIG. 8 is "/eventHistory/eventInformation[serviced="www.service201B.c om"]", which means the operation history information upon the access to the server apparatus 201B is requested, i.e., which means that the operation history information to the content transmitted by the server apparatus 201B is requested.

The content receiving unit 402 receives the content containing the user information application program described above from the server apparatus 201 through the network 301. The content contains the service information assigned to the server apparatus 201 that transmits the content.

For the attribute value of the user attribute information extracted by the user information extracting unit 405, the user information output control unit 407 refers to the filter information stored in the filter information storage unit 406 corresponding to the service information contained in the content received by the content receiving unit 402, and determines whether the usage of the attribute value of the user attribute information by the user information application program is allowed or not. When determining that the usage is not allowed, the user information output control unit 407 does not transmit the user information application program to the content processing unit 403 in order to deny the access to the attribute value of the user attribute information by the user information application program. When determining that the usage is allowed, the user information output control unit 407 outputs the user attribute information, and transmits the user information application program to the content processing unit 403 in order to permit the access to the attribute value of the user attribute information by the user information application program.

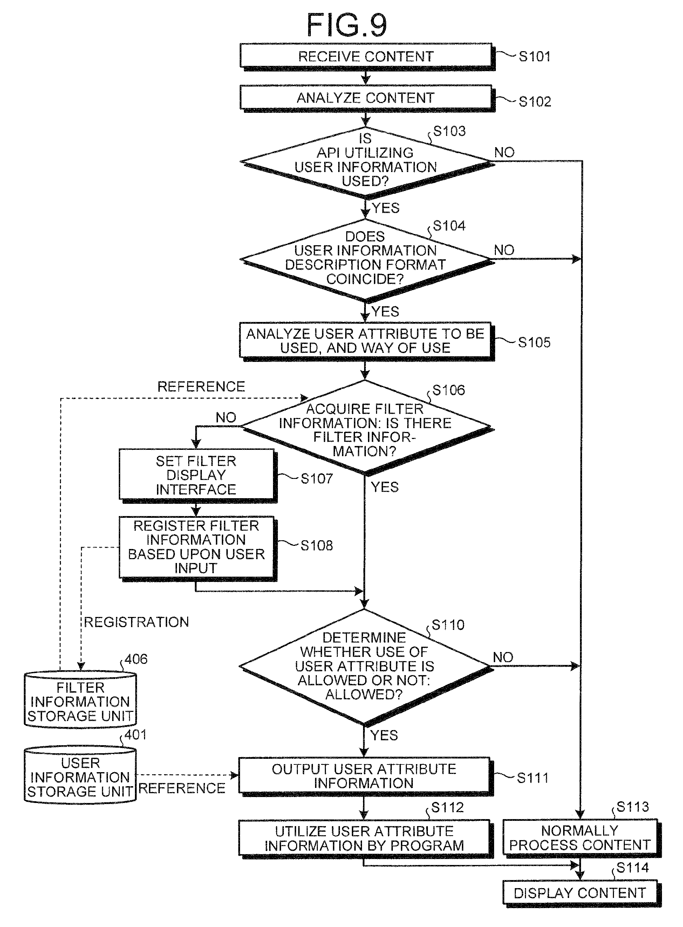

The procedure of the content display process executed by the content display apparatus 101 according to this embodiment will be described with reference to FIG. 9. It is supposed that, in the description below, the user information illustrated in FIG. 7, the user information application program illustrated in FIG. 8, and the filter information illustrated in FIG. 6 are used. It is also supposed that the common API is the XPath. The processes in steps S101 to S104 are the same as those in the first embodiment. It is supposed that, in step S101, the content transmitted from the server apparatus 201A is received, and the content has buried therein the user information application program and contains the service information assigned to the server apparatus 201A. In step S105, the content display apparatus 101 analyzes the XPath (see the ninth line in FIG. 8) of the user information application program so as to detect that the user information application program utilizes the operation history information to the content transmitted by the server apparatus 201B (www.service201B.com), thereby extracting the operation history information by the function of the user information extracting unit 405. The content display apparatus 101 also detects that the operation history information is not transmitted to the server apparatus 201. This can be determined from the XPath (eventHistory/eventInformation/[serviced="www.service201B.c om"].

The content display apparatus 101 then determines whether or not the filter information, which is the information to the operation history information extracted in step S105, and which corresponds to the service information contained in the content received in step S101, is stored in the filter information storage unit 406 by using the function of the user information output control unit 407 (step S106). When the filter information is stored (step S106: YES), the content display apparatus 101 reads the operation history information from the user information storage unit 401 (step S109), and determines whether the use of the attribute value of the user attribute information is allowed or not in the user information application program by using the filter information (step S110).

In the example in FIG. 6, the filter information corresponding to the service information "www.service201A.com" assigned to the server apparatus 201A is present, so that the result of the determination in step S106 is positive. The disclosure level set to "www.service201B.com" that is the attribute value of the operation history information in the filter information is "protected" (see the third line in FIG. 6). The content display apparatus 101 detects that the operation history information that is a target to be used is not transmitted to the server apparatus 201 in step S105, which is in accordance with the disclosure level of "protected". Therefore, the content display apparatus 101 determines that the access to the attribute value of the operation history information by the user information application program is allowed (step S110: YES), and then, outputs the operation history information (step S111). In the first embodiment, the content display apparatus 101 executes the process of acquiring the user attribute information in step S109 before step S110. However, in this embodiment, it is unnecessary to acquire the user attribute information from the user information storage unit 401 before determining the accessibility in step S110, since the attribute information to be handled is static operation history information.

The content display apparatus 101 executes the user information application program, and changes the content displayed on the display unit by utilizing the user information output in step S111 (step S112). For example, the user information application program illustrated in FIG. 8 has recommended goods list information, indicating a list of multimedia content or plural goods, statically buried therein (see the eleventh line). The content display apparatus 101 selects the multimedia content or goods indicated by the recommended goods list information by utilizing a keyword indicated by the operation history information, combines the recommended goods list information indicating the multimedia content or goods with the content, and decodes the resultant in step S112. The content display apparatus 101 displays the decoded content on the display unit in step S114. For example, when the recommended goods list information is metadata involved with the multimedia content or goods, the content display apparatus 101 selects all or some of each metadata involved with the plural multimedia content or goods, combines the metadata with the content, decodes the resultant, and displays the decoded data on the display unit.

When determining that the use of the attribute value of the user attribute information by the user information application program is denied by using the filter information (step S110: NO), the content display apparatus 101 decodes the content received in step S101 (step S113), and displays the decoded content on the display unit by using the function of the content display control unit 404 (step S114). When the filter information that is the information to the operation history information extracted in step S105 and that corresponds to the service information contained in the content received in step S101 is not stored in the filter information storage unit 406 (step S106), the content display apparatus 101 executes the processes in steps S107 and S108. In this case, the content display apparatus 101 generates the filter information for each server apparatus 201. For example, the content display apparatus 101 generates the filter information in correspondence with the service information contained in the content received in step S101.

According to the configuration described above, not only the content display apparatus 101 can control the access to the user attribute information and its attribute value according to the disclosure level with respect to the request of using the user information from the server apparatus 201 of the service provider, but also the service provider can realize a target advertisement utilizing the disclosure information, or recommendation services of content and goods as flexibly changing the way of using the user information within the disclosure level of the user attribute.

Specifically, the filter information illustrated in FIG. 7 is formed in such a manner that the accessibility information according to the service information (eventInformation/serviceId) assigned to the server apparatus 201 transmitting the content is associated with the operation history information indicating the operation input performed by the user to the corresponding content. Therefore, the content display apparatus 101 can make access control such that the operation history information indicating that "viewing operation" is performed to a content provided by a certain site A is utilized only by the user information application program contained in the content provided by a site B. For example, the content display apparatus 101 can perform control such that the operation history information that is provided by the video-sharing and viewing site such as YouTube (registered trademark), Yahoo! (registered trademark) Video, or Hikari TV (registered trademark) and that indicates the "viewing operation" is utilized from the user information application program contained in the content provided by a sales site such as Amazon (registered trademark).

### [Third embodiment]

An information processing apparatus according to a third embodiment will next be described. The components same as those in the first embodiment or the second embodiment are identified by the same numerals for description, or the description is not repeated.

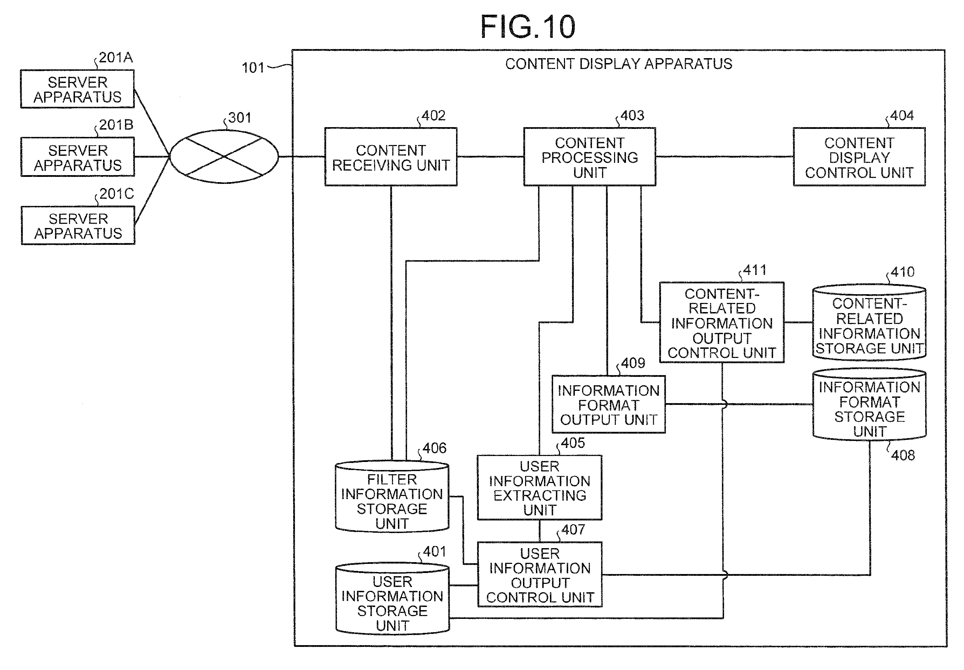

FIG. 10 is a diagram illustrating a configuration of an information processing system including a content display apparatus 101 serving as the information processing apparatus according to this embodiment, and a functional configuration of the content display apparatus 101. The configuration of the information processing system is the same as that in the first embodiment. The content display apparatus 101 according to this embodiment includes a user information storage unit 401, a content receiving unit 402, a content processing unit 403, a content display control unit 404, a user information extracting unit 405, a filter information storage unit 406, a user information output control unit 407, an information format storage unit 408, and an information format output unit 409, and further includes a content-related information storage unit 410 and a content-related information output control unit 411.

In this embodiment, the operation history information described in the second embodiment is handled as the user attribute information. It is supposed that the user attribute information is expressed hierarchically, and the user information storage unit 401 is a relational database management system that manages the user attribute information described above.

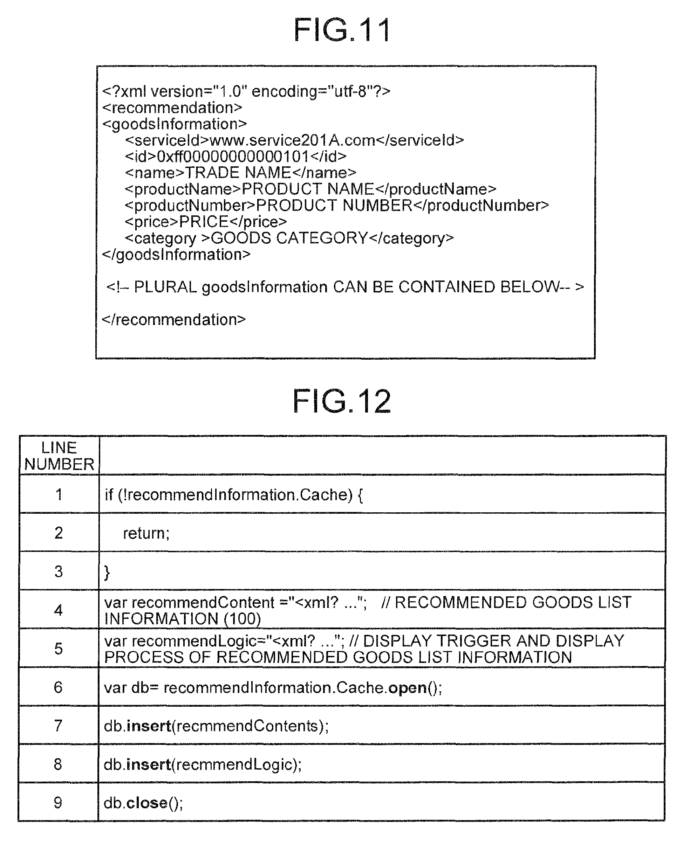

The content-related information storage unit 410 stores therein content-related information processed by the execution of a related information processing program buried in the content received by the content receiving unit 402. The content-related information is, for example, metadata involved with goods sold on a Web site provided by the server apparatus 201 as the content. FIG. 11 is a view illustrating the content-related information. FIG. 11 illustrates the metadata related to plural goods as the content-related information in the XML format. The content-related information may be metadata involved with the multimedia content, such as video image, music, image, document, or book, provided by the server apparatus 201. The content-related information corresponds to the recommended goods list information described in the second embodiment. The metadata may be formed such that the metadata is buried as a part of the HTML document that is the content in Microformat or RDF (Resource Description Framework), for example, extracted from the content, and stored in the content-related information storage unit 410. Alternatively, the metadata may be contained in the content-related information processing program as an object (e.g., JSON object) of JavaScript, extracted from the content-related information processing program, and stored in the content-related information storage unit 410. In this embodiment, it is supposed that the content-related information is expressed hierarchically, and the content-related information storage unit 410 is a relational database management system that manages the content-related information described above.

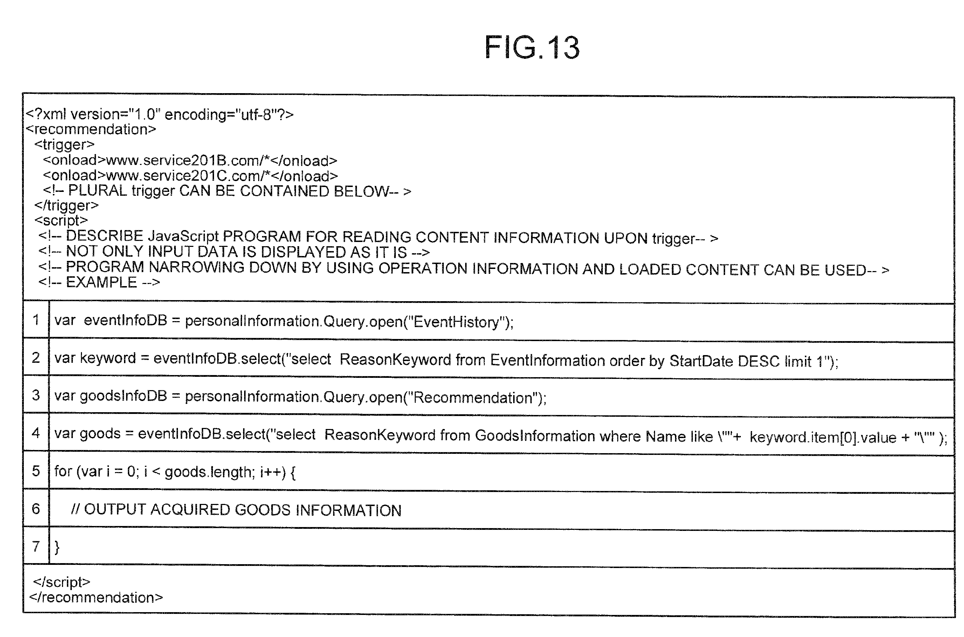

The content-related information processing program is, for example, a JavaScript program that is buried in the content such as the HTML document, and the content-related information processing program transmits the content-related information and displays the content-related information on the display unit of the content display apparatus 101. FIG. 12 is a view illustrating a part of the description of the content-related information processing program. The content-related information processing program illustrated in FIG. 12 contains recommended goods list information as the content-related information. In the content-related information processing program, XML data (see the fourth line) requesting the registration of the recommended goods list information and XML data (see the fifth line) indicating how to display the recommended goods list information and what trigger is used are written. The XML data on the fourth line is, for example, the one illustrated in FIG. 11. FIG. 13 is a view illustrating the XML data written on the "recommendLogic" on the fifth line in FIG. 12. The element of <script> illustrated in FIG. 13 assumes the JavaScript program. In this example, the following processes are described: the latest operation history information is acquired and the keyword indicated by the operation history information is acquired (see the second line); the goods indicated by the recommended goods list information are selected in SQL by using the keyword (see the fourth line); and the recommended goods list information indicating the corresponding goods is displayed on the display unit (see the fifth line to the seventh line). The element of <trigger> indicates the trigger for executing the process described on the element of <script>. FIG. 13 illustrates that, when the content is received from the server apparatus 201B (www.service201B.com) or the server apparatus 201C (www.service201C.com) as a result of access to the server apparatus 201B or the server apparatus 201C, the process described on the element of <script> is executed. Specifically, in the content-related information processing program, the timing of outputting the content-related information is designated.

The content-related information storage unit 410 stores therein not only the content-related information but also output control information that is utilized by the later-described content-related information output control unit 411 for controlling the output of the content-related information, as needed. The output control information is for specifying a timing (output timing) of outputting the content-related information. The output control information defines the time of accessing to the specific server apparatus 201 as the output timing, and indicates the service information of the corresponding server apparatus 201 and how to output the content-related information. Specifically, the output control information is generated based upon the description of the element of <trigger> and the element of <script> in the content-related information processing program illustrated in FIG. 12, and indicates that the process described below is executed. Specifically, the output control information defines the timing of receiving the content from the server apparatus 201B or 201C as a result of access to the server apparatus 201B or 201C as the output timing, indicates the service information (www.service201B.com) of the server apparatus 201B or the service information (www.service201C.com) of the server apparatus 201C, acquires the latest operation history information so as to acquire the keyword indicated by the operation history information, selects the goods indicated by the recommended goods list information in SQL by using the operation history information, and outputs the recommended goods list information indicating the selected goods.

The content-related information output control unit 411 selects the content-related information stored in the content-related information storage unit 410 as needed, and outputs the selected one to the content processing unit 403 at a specified timing. In this case, when the output control information is stored in the content-related information storage unit 410, the content-related information output control unit 411 controls the timing of outputting the content-related information by using the output control information.

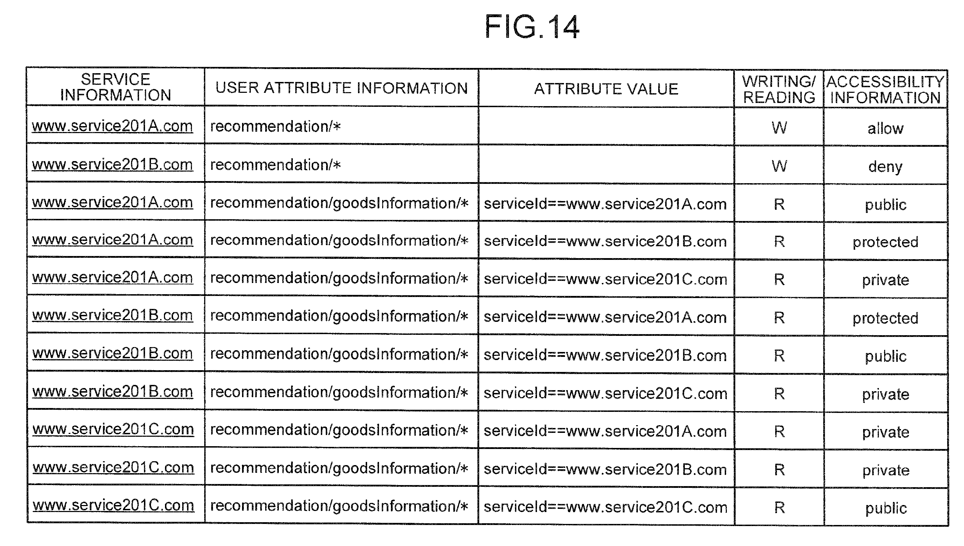

The filter information storage unit 406 stores therein the filter information that indicates whether or not the use of each attribute value of each user attribute information by the user information application program is allowed or not, and indicates whether the reading of the content-related information from the content-related information storage unit 410 or the writing of the content-related information to the content-related information storage unit 410 is allowed or not. FIG. 14 is a view illustrating the filter information according to this embodiment. As illustrated in FIG. 14, the filter information is formed such that the accessibility information and writing/reading information are associated with each of the service information, the content-related information, and information value that is the value of the content-related information. The writing/reading information is information indicating the writing ("W" in FIG. 14) of the content-related information or the reading ("R" in FIG. 14) of the content-related information. When the writing/reading information indicates the writing of the content-related information, either one of an allowing level or denying level is set as the accessibility information. When the writing/reading information indicates the reading of the content-related information, the disclosure level same as that in the first embodiment is set as the accessibility information. The filter information is not limited thereto. The filter information may be formed such that the information indicating whether the use of each attribute value of each user attribute information by the user information application program is allowed or not and the information indicating whether the writing of the content-related information to the content-related information storage unit 410 or the reading of the content-related information from the content-related information storage unit 410 is allowed or not are separately stored in a different table.

The content processing unit 403 executes the user information application program transmitted from the user information output control unit 407. When the content-related information output control unit 411 outputs the content-related information, the content processing unit 403 combines the content-related information with the content received by the content receiving unit 402, decodes the content, and transmits the decoded content to the content display control unit 404. The content display control unit 404 displays the content decoded by the content processing unit 403 on the display unit.

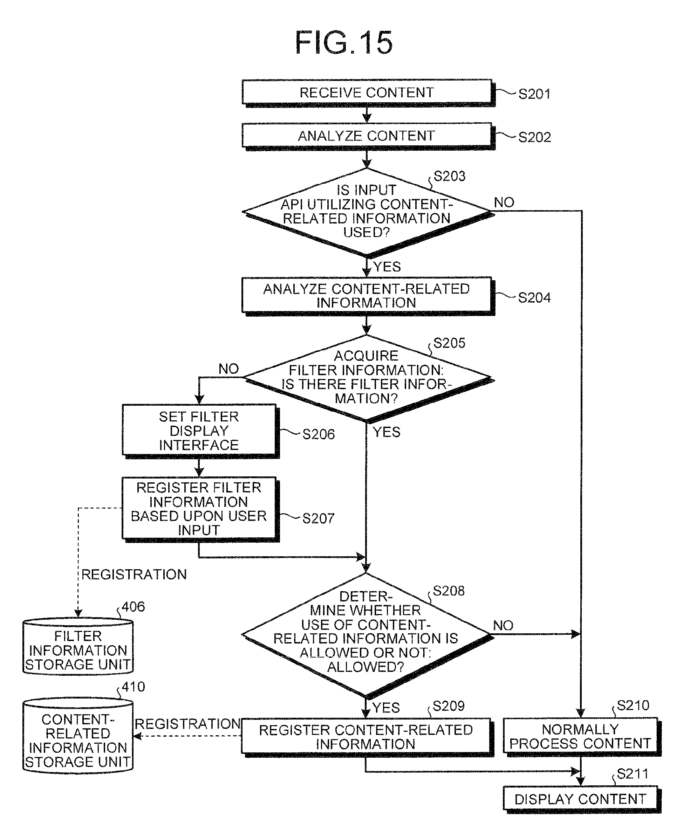

The procedure of the content display process by the content display apparatus 101 according to this embodiment will next be described. Firstly, the procedure of the content display process involved with the storage of the content-related information to the content-related information storage unit 410 will be described with reference to FIG. 15. It is supposed that, in the description below, the recommended goods list information illustrated in FIG. 11, the content-related information processing program illustrated in FIG. 12, and the filter information illustrated in FIG. 14 are used. The content display apparatus 101 firstly receives the content from the server apparatus 201 (for example, server apparatus 201A) by the function of the content receiving unit 402 (step S201). The received content has the recommended goods list information illustrated in FIG. 11 and the content-related information processing program illustrated in FIG. 13 buried therein. The received content also has the service information assigned to the server apparatus 201A. The content display apparatus 101 then analyzes the content received in step S201 by the function of the content processing unit 403 (step S202) so as to determine whether JavaScript program buried in the content calls the access API to the content-related information storage unit 410 or not, i.e., whether it is the content-related information processing program or not (step S203). In this embodiment, the content display apparatus 101 makes determination by determining whether "recommendInformation.Cache" is called or not on the first line in FIG. 12. If the content display apparatus 101 determines that the access API is not called (step S203: NO), the content-related information is not registered, so that the content display apparatus 101 decodes the content (step S210), and allows the display unit to display the decoded content by the function of the content display control unit 404 (step S211).

On the other hand, the content display apparatus 101 determines that the access API is called (step S203: YES), the function of the content-related information output control unit 411 is called from the content processing unit 403. The content display apparatus 101 analyzes the XML data indicating the content-related information buried in the content received in step S201 by using this function, and detects that the content-related information processing program requests the registration of the content-related information (recommendation/goodsInformation in FIG. 11). The content display apparatus 101 then determines whether the filter information, which is related to the content-related information buried in the content received in step S201, and which corresponds to the service information contained in the content received in step S201, is stored in the filter information storage unit 406 or not (step S205). When the filter information is stored (step S205: YES), the content display apparatus 101 reads the filter information from the filter information storage unit 406. Then, the content display apparatus 101 determines whether the registration of the content-related information is allowed or not by using the filter information (step S208).

In the example in FIG. 14, the filter information corresponding to the service information "www.service201A.com" assigned to the server apparatus 201A is present, so that the result of the determination in step S205 is positive. The accessibility information set for the writing/reading information involved with the writing is "allow" (see the third line in FIG. 14) in the filter information. Therefore, the content display apparatus 101 determines that the registration of the content-related information is allowed (step S208: YES), thereby storing the content-related information into the content-related information storage unit 410 (step S209). The content display apparatus 101 generates output control information, and stores the generated output control information into the content-related information storage unit 410. The output control information indicates the process of indicating the service information of the server apparatus 201B or the service information of the server apparatus 201C on an output timing that is defined as the timing of receiving the content from the server apparatus 201B or 201C as a result of access to the server apparatus 201B or 201C based upon the description of the element of <trigger> and the element of <script> in the content-related information processing program illustrated in FIG. 12, acquiring the latest operation history information, acquiring a keyword indicated by the operation history information, selecting the goods indicated by the recommended goods list information with SQL by using the keyword, and outputting the recommended goods list information indicating the selected goods. The content display apparatus 101 decodes the content received in step S201 in step S211, and displays the decoded content on the display unit by the function of the content display control unit 404.

When determining that the registration of the content-related information is denied by using the filter information (step S208: NO), the content display apparatus 101 decodes the content received in step S201 (step S210), and displays the decoded content on the display unit by the function of the content display control unit 404 (step S211). In this case, the content display apparatus 101 may transmit to the server apparatus 201A a message indicating that the registration of the recommended goods list information provided by the server apparatus 201A is denied. When the filter information, which is related to the content-related information buried in the content received in step S201, and which corresponds to the service information contained in the content received in step S101, is not stored in the filter information storage unit 406 (step S205: NO), the content display apparatus 101 allows the display unit to display a user interface screen that lets the user to determine whether the registration of the content-related information is allowed or not (step S206). The content display apparatus 101 then generates the filter information, indicating whether the registration of the content-related information is allowed or not, according to the operation input of the user on the user interface screen through the operation input unit, and stores the filter information into the filter information storage unit 406 (step S207). In this case, the content display apparatus 101 stores the filter information in the filter information storage unit 406 in correspondence to the service information contained in the content received in step S201. The content display apparatus 101 generates the output control information based upon the description of the element of <trigger> and the element of <script> in the content-related information processing program, and stores the generated output control information into the content-related information storage unit 410.

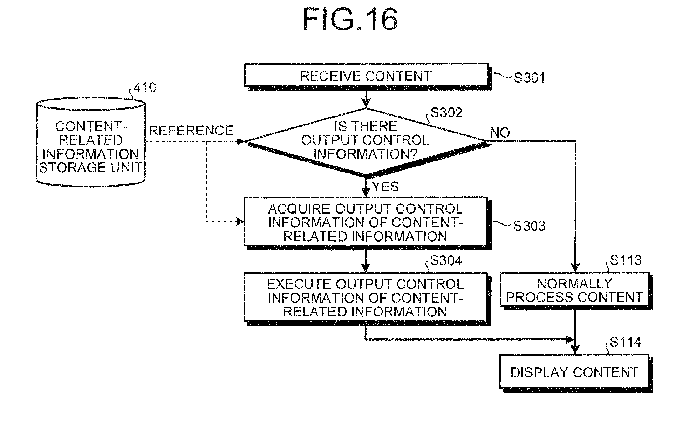

The procedure of the content display process of selecting the content-related information stored in the content-related information storage unit 410 as needed, and displaying the content-related information together with the content at a specified timing will be described with reference to FIG. 16. In the description below, the content-related information transmitted by the server apparatus 201A as being buried in the content is stored in the content-related information storage unit 410, and the content display apparatus 101 receives the content from the server apparatus 201 (e.g., the server apparatus 201B) other than the server apparatus 201A. It is supposed that the content-related information storage unit 410 stores therein the output control information indicating the process of indicating the service information (www.service201B.com) of the server apparatus 201B or the service information (www.service201C.com) of the server apparatus 201C on an output timing that is defined as the timing of receiving the content from the server apparatus 201B or 201C as a result of access to the server apparatus 201B or 201C, acquiring the latest operation history information, acquiring a keyword indicated by the operation history information, selecting the goods indicated by the recommended goods list information with SQL by using the keyword, and outputting the recommended goods list information indicating the selected goods. When receiving the content from the server apparatus 201B by the function of the content receiving unit 402 in step S301, the content display apparatus 101 analyzes the content by the function of the content processing unit 403. Then, the content display apparatus 101 determines whether the output control information indicating the service information (www.service201B.com) of the server apparatus 201B is stored in the content-related information storage unit 410 or not by the function of the content-related information output control unit (step S302). When the output control information is not stored in the content-related information storage unit 410 (step S302: NO), the content display apparatus 101 decodes the content received in step S301 (step S113), and displays the decoded content on the display unit by the function of the content display control unit 404 (step S114).

On the other hand, when the output control information is stored in the content-related information storage unit 410 (step S302: YES), the content display apparatus 101 reads the output control information from the content-related information storage unit 410 (step S303), and executes the process indicated by the output control information (step S304). Here, the content display apparatus 101 executes the process of acquiring the latest operation history information from the user information storage unit 401, acquiring a keyword indicated by the operation history information, selecting the goods indicated by the recommended goods list information, stored in the content-related information storage unit 410, with SQL by using the keyword, and outputting the recommended goods list information indicating the selected goods. For example, when the content-related information is metadata, the content display apparatus 101 selects all or some of each metadata involved with the plural goods, and outputs the resultant. In step S113, the content display apparatus 101 combines the output recommended goods list information with the content received in step S301 by using the function of the content processing unit 403, decodes the content, and displays the decoded content on the display unit in step S114.

According to the configuration described above, the content display apparatus 101 can display the recommended information provided by a certain server apparatus 201 during access to the other server apparatus 201. More specifically, during access to a sales site such as Amazon (registered trademark) provided by the server apparatus 201 operated by a certain service provider, the content display apparatus 101 stores the recommended goods list information by the content-related information processing program buried in the Web page as content. The content display apparatus 101 can display the recommended goods list information on a timing intended by the service provider, such as upon the access to IPTV service site, e.g., acTVila (registered trademark) or Hikari TV (registered trademark), provided by the server apparatus 201 operated by the other service provider. Therefore, after the user views the video content received from the IPTV service site, the content display apparatus 101 can recommend to the user goods involved with the video content, such as a DVD package or original book. The conventional recommendation service by the service provider is limited to the recommended content or goods in this site based upon the access history in the service provider. However, according to this embodiment, the access history of the site provided by the other service provider can be utilized by using the operation history information acquired preliminarily from the plural server apparatuses 201, and further, the recommended service can be provided at a timing other than at the timing of the access to the site, such as at a timing of accessing to another site.

### [Fourth embodiment]

An information processing apparatus according to a fourth embodiment will next be described. The components same as those in the first to the third embodiments are identified by the same numerals for description, or the description is not repeated.

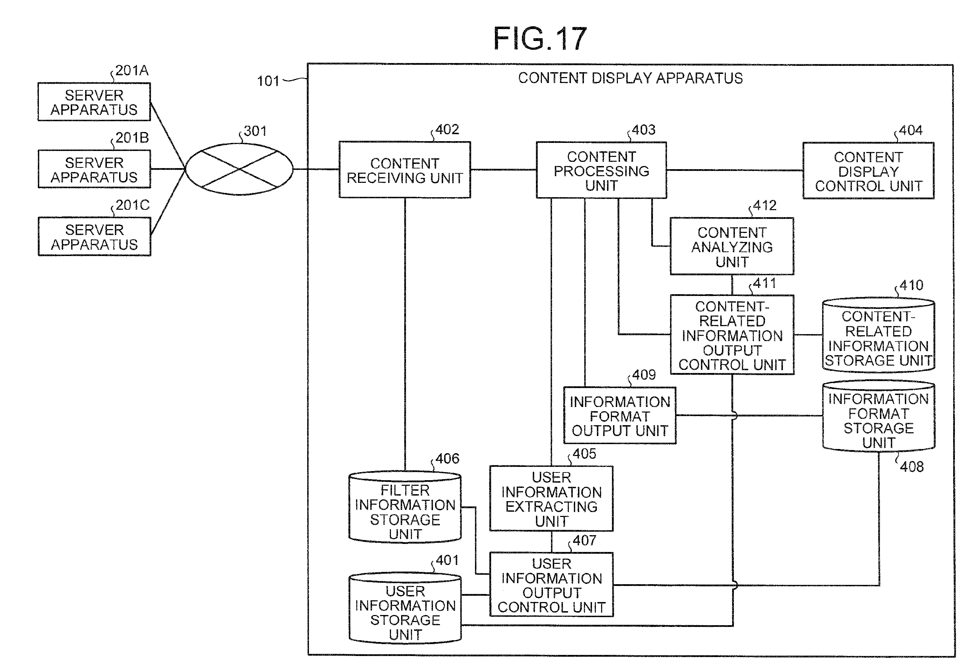

In the third embodiment, the content display apparatus 101 controls the output of the content-related information based upon the content-related information processing program buried in the content received from the server apparatus 201. However, in this embodiment, the content display apparatus 101 controls the output of the content-related information based upon the content displayed on the display unit. FIG. 17 is a diagram illustrating a configuration of an information processing system including a content display apparatus 101 serving as the information processing apparatus according to this embodiment, and a functional configuration of the content display apparatus 101. The configuration of the information processing system is the same as that in the first embodiment. The content display apparatus 101 according to this embodiment includes a user information storage unit 401, a content receiving unit 402, a content processing unit 403, a content display control unit 404, a user information extracting unit 405, a filter information storage unit 406, a user information output control unit 407, an information format storage unit 408, an information format output unit 409, a content-related information storage unit 410 and a content-related information output control unit 411, and further includes a content analyzing unit 412.

The content analyzing unit 412 analyzes a character string contained in the content, which is decoded by the content processing unit 403 and is displayed on the display unit by the content display control unit 404, or metadata buried in the content, generates output control information, which is used when the content-related information output control unit 411 selects the content-related information stored in the content-related information storage unit 410, by using the character string or metadata, and stores the generated output control information to the content-related information storage unit 410.

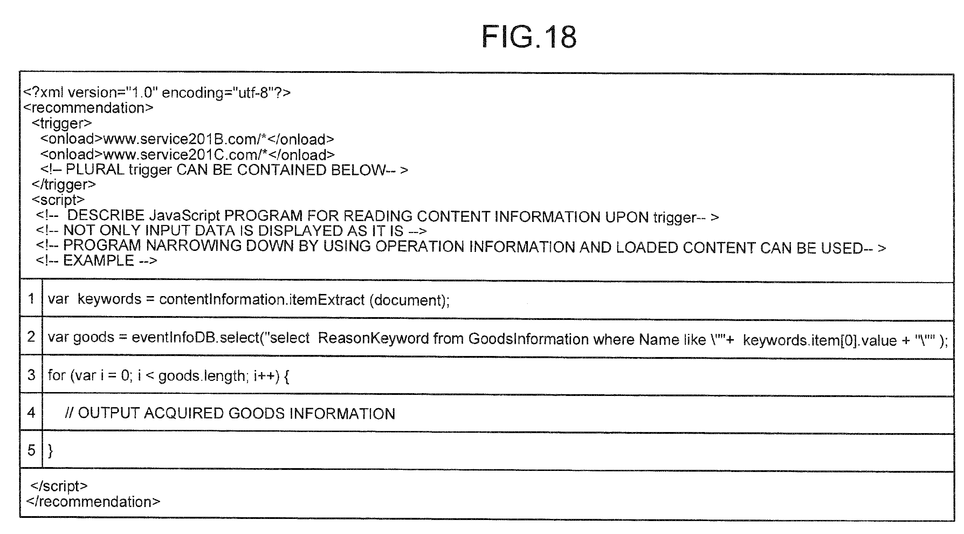

FIG. 18 is a view illustrating the XML data designated by the "recommendLogic" on the fifth line in the content-related information processing program illustrated in FIG. 12. The element of <script> illustrated in FIG. 18 assumes the JavaScript program. In this example, the following processes are described: a characteristic keyword is extracted from the character string or metadata contained in the content that is currently displayed (see the first line); the goods indicated by the recommended goods list information are selected by using the keyword (see the second line); and the recommended goods list information indicating the corresponding goods is output (see the third line to the fifth line). The content analyzing unit 412 generates the output control information indicating the keyword extracted from the content through the execution of the content-related information processing program. The process of extracting the keyword is realized by an API call of contentInformation.itemExtract(document) with a document object containing the whole content currently displayed being set as an argument. The request of reading the content-related information is written in the content-related information processing program according to this embodiment.

In this embodiment, the procedure of the content display process for selecting, as needed, content-related information stored in the content-related information storage unit 410, and displaying the selected information together with the content at a specified timing is almost the same as that in FIG. 16. It is to be noted that, in step S301, the content display apparatus 101 analyzes the content received from the server apparatus 201, analyzes the content-related information processing program buried in the content, and executes the same. The content display apparatus 101 also analyzes the character string contained in the content or the metadata buried in the content, generates the output control information by using the character string or the metadata, and stores the output control information into the content-related information storage unit 410 in step S301. In step S304, by using the function of the content-related information output control unit 411, the content display apparatus 101 selects the goods indicated by the recommended goods list information stored in the content-related information storage unit 410, by using the keyword indicated by the output control information stored in the content-related information storage unit 410, and outputs the recommended goods list information indicating the selected goods. In step S114, the content display apparatus 101 combines the output recommended goods list information with the content received in step S301, decodes the content by the function of the content processing unit 403, and displays the decoded content on the display unit by the function of the content display control unit 404.

According to the configuration described above, the content display apparatus 101 can display an economy-related book as recommended goods, when a user accesses to economic news on a news site provided by the server apparatus 201. Therefore, the service provider can realize a target advertisement utilizing the disclosure information, or recommendation services of content and goods as flexibly changing the way of using the user information within the disclosure level of the user attribute.

### [Fifth embodiment]

An information processing apparatus according to a fifth embodiment will next be described. The components same as those in the first to the fourth embodiments are identified by the same numerals for description, or the description is not repeated.

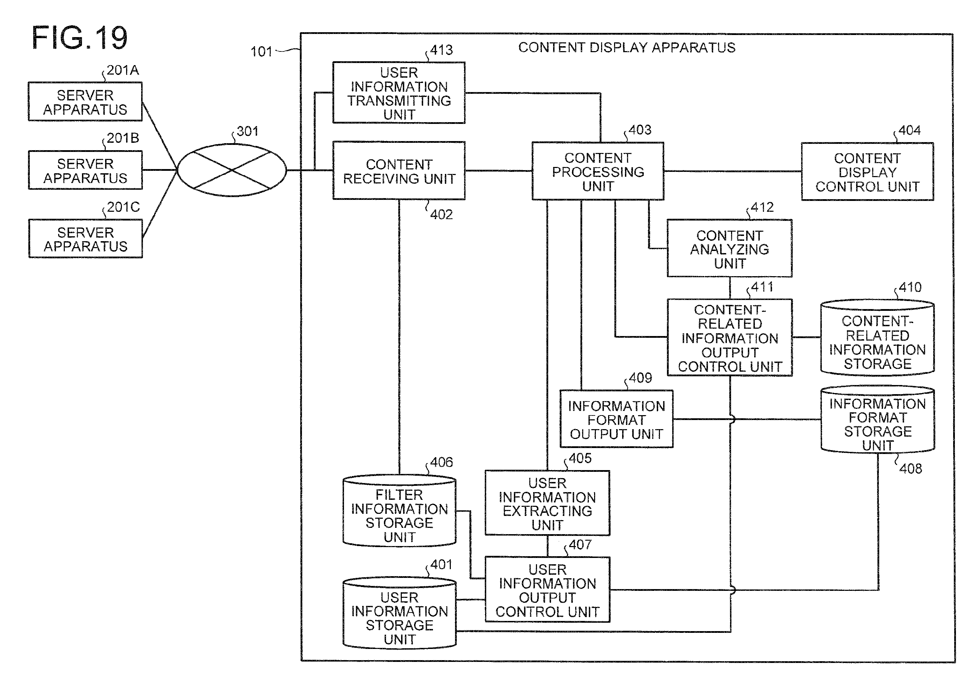

FIG. 19 is a diagram illustrating a configuration of an information processing system including a content display apparatus 101 serving as the information processing apparatus according to this embodiment, and a functional configuration of the content display apparatus 101. The configuration of the information processing system is the same as that in the first embodiment. The content display apparatus 101 according to this embodiment includes a user information storage unit 401, a content receiving unit 402, a content processing unit 403, a content display control unit 404, a user information extracting unit 405, a filter information storage unit 406, a user information output control unit 407, an information format storage unit 408, an information format output unit 409, a content-related information storage unit 410, a content-related information output control unit 411, and a content analyzing unit 412, and further includes a user information transmitting unit 413.

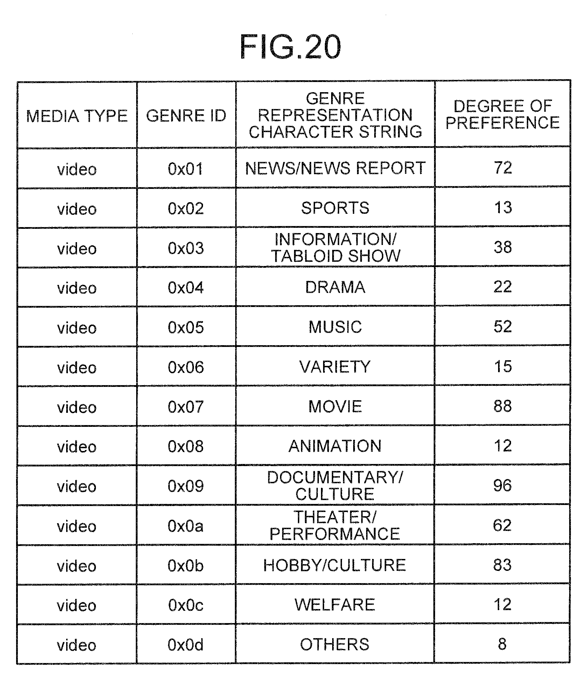

The user information storage unit 401 stores therein preference information indicating a degree of preference such as a user's interest or favor, as the user attribute information. FIG. 20 is a view illustrating the preference information. The preference information in FIG. 20 indicates the degree of preference of the user for each genre of the multimedia content such as moving image including a television, music, or book. Specifically, the preference information indicates a media type, a genre ID, a genre representation character string, and degree of preference, in association with one another. The media type indicates a type of multimedia content, such as moving image, music, or book. The genre ID is assigned to each genre. The genre representation character string indicates a genre. The degree of preference is represented by integers of "0" to "100". This is the attribute value of the preference information.

The filter information storage unit 406 stores therein the filter information in which the accessibility information is associated with each of the media type and genre ID in the preference information.

The user information transmitting unit 413 transmits the user attribute information, output from the user information output control unit 407, based upon the request from the user information application program buried in the content received by the content receiving unit 402. This embodiment handles the user information application program that is buried in the content received by the content receiving unit 402 and that requests the transmission of the preference information to the server apparatus 201 as the user information.

The content-related information output control unit 411 outputs the content-related information stored in the content-related information storage unit 410.

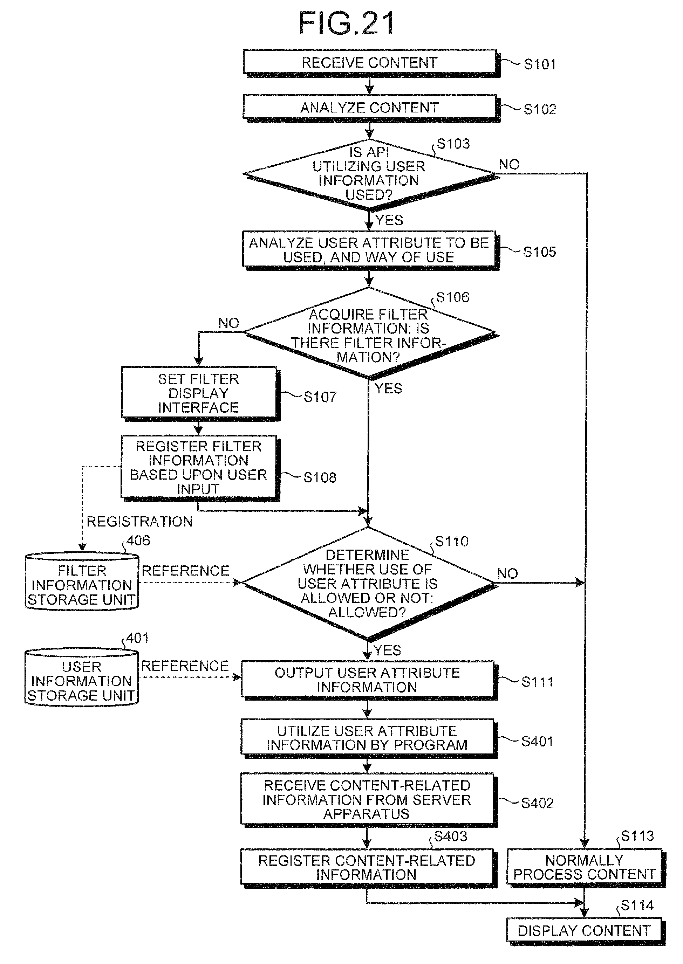

The procedure of the content display process executed by the content display apparatus 101 according to this embodiment will next be described with reference to FIG. 21. The processes in steps S101 to S110 are the same as those in the first embodiment. Since the user information application program contained in the content received in step S301 requests the transmission of the user attribute information (here, the preference information) to the server apparatus 201, the content display apparatus 101 allows, by using the function of the user information output control unit 407, only access to the attribute value, to which the "public" is set by the filter information, of the preference information whose transmission is requested from the user information application program (step S110: YES), and outputs the preference information by the function of the user information output control unit 407 (step S111). The content display apparatus 101 transmits the preference information to the server apparatus 201 through the user information transmitting unit 413 by the execution of the user information application program (step S401). In this case, the content display apparatus 101 serializes the preference information into the XML format, and transmits the resultant, for example. The format does not matter, so long as the preference information illustrated in FIG. 20 can be transmitted without being deteriorated.

When receiving the preference information transmitted from the content display apparatus 101, the server apparatus 201 transmits the recommended goods list information indicating the recommended goods selected by use of the preference information to the content display apparatus 101 as metadata. It can be determined from the preference information illustrated in FIG. 20 that the user tends to have a preference for the genre of "documentary/culture", "hobby/culture", and "movie". Therefore, the server apparatus 201 selects the goods by utilizing this tendency. When receiving the recommended goods list information transmitted from the server apparatus 201 (step S402), the content display apparatus 101 stores the recommended goods list information into the content-related information storage unit 410 (step S403). The detailed procedure of this process is the same as the processes in steps S204 to S209 in FIG. 15. Thereafter, in step S114, the content display apparatus 101 combines the recommended goods list information stored in the content-related information storage unit 410 with the content received in step S101, and decodes the content, by the function of the content processing unit 403, and displays the decoded content on the display unit by the function of the content display control unit 404.

According to the configuration described above, the content display apparatus 101 can enhance the precision of the recommended goods list information presented to the user as the content-related information, since the user information is transmitted to the server apparatus 201. In the second embodiment, the recommended goods list information involved with the recommended goods is statically buried in the content-related information processing program, regardless of the user's interest and favor. However, in this embodiment, the server apparatus 201 can select the recommended goods by using the preference information indicating the user's interest and favor. Accordingly, the service provider can realize a target advertisement utilizing the disclosure information, or recommendation services of content and goods as flexibly changing the way of using the user information within the disclosure level of the user attribute.

### [Modifications]

The present invention is not limited to the above-mentioned embodiments, and various modifications are possible without departing from the scope of the present invention. Various inventions can also be embodied by appropriately combining the plural constituents described in the above-mentioned embodiments. For example, some constituents may be deleted from all constituents described in the embodiments. Alternatively, the constituents in the different embodiments may be combined, as needed. Various modifications described below are possible.

In the above-mentioned embodiments, various programs executed by the content display apparatus 101 may be stored on a computer connected to the network such as the Internet, and provided as being downloaded through the network. The various programs may be recorded on a computer-readable recording medium such as CD-ROM, flexible disk (FD), CD-R, or DVD (Digital Versatile Disk) in an installable form or executable form, and provided as a computer program product.

In the above-mentioned embodiments, when the network 301 is a broadcasting network such as digital terrestrial broadcasting, BS, or CS, the content may be a broadcast program or BML (Broadcast Markup Language) document received as data broadcasting. When the network 301 is the Internet or NGN, the content receiving unit 402 is supposed to be HTTP (Hypertext Transfer Protocol) client mounted on TCP (Transmission Control Protocol), an RTP (Real-time Transport Protocol) client mounted on UDP (User Datagram Protocol), or FLUTE (File Delivery over Unindirectional Transport) client. However, any communication protocol may be used, so long as it can receive content from the server apparatus 201. When the network 301 is the digital terrestrial broadcasting, the content receiving unit 402 has a function of receiving MPEG-2 stream, for example.

The content processing unit 403 may have a function of analyzing and executing BML renderer and ECMA Script, for example, instead of a function of analyzing and executing HTML renderer and JavaScript.

In the above-mentioned embodiments, the user information storage unit 401 is not limited to the above-mentioned examples. It may be a relational database. The user information storage unit 401 does not have to be constructed by a single database management system. It may be constructed by plural database management systems, e.g., may use SQLite3, Oracle, MySQL, and the like. It may also be constructed on a single physical storage unit, or may be a database management system composed of plural physical auxiliary storage units such as NAS (Network Attached Storage) or SAN (Storage Area Network). The user information storage unit 401 may not be the database management system, but may be a file group such as a mere CSV format, or Key/Value store that manages a set of a user attribute name ("name", "sex", "age", etc.) indicating its name and an attribute value ("John", "male", "25", etc.) that is the value of the user attribute information as a list for each user attribute information, so long as it has means of acquiring user information (entry). The user information storage unit 401 does not have to store the user information in a non-volatile region of the auxiliary storage unit. The user information storage unit 401 may be to store the user information in memory of a main storage unit. The same is applied to the configuration of the filter information storage unit and the filter information stored in the filter information storage unit 406.

In the above-mentioned embodiments, the common description format of the user information and the common API for making access to the user information are not limited to those described in the embodiments. For example, the common description format may be represented as a hierarchical object of JavaScript. The common API for making access to the user information may be the one utilizing XQuery or SQL (Structured Query Language).

In the fifth embodiment described above, the description involved with the transmission of the user attribute information to the server apparatus 201 in the user information application program is not necessarily through the common API. For example, the content display apparatus 101 may use XMLHTTPRequest of AJAX (Asynchronous JavaScript + XML) that is a standard technique for asynchronously receiving and transmitting data between the Internet browser and the server apparatus 201. When the user information application program describes that the user attribute information extracted as the user attribute information that is requested to be used is transmitted to the server apparatus 201 through the general API such as XMLHTTPRequest as a result of the analysis of the user information application program, the user information extracting unit 405 determines whether or not the user attribute information acquired through the common API is set as transmission data of XMLHTTPRequest.

In the above-mentioned embodiments, the filter information is not limited to those described in the embodiments. The filter information may have a structure that can set the accessibility information for each of the user attribute information, the attribute value, and the user information application program, or may have a structure that can set the accessibility information for each area of the Web site provided by the service provider.

The user information application program is not limited to the one described in the above-mentioned embodiments, so long as it can logically extract the user information utilized through the analysis of the program code. For example, the user information application program may be ECMAScript program buried in BML (Broadcast Markup Language) document.

In the above-mentioned embodiments, the user information application program illustrated in FIG. 3 describes that the confirmation of the version of the description format of the user information is expressly executed by using the format information or revision information stored in the information format storage unit 408. However, there can be a user information application program that does not expressly execute the confirmation described above. In this case, the user information output control unit 407 may detect inconsistency with the internally-managed schema through the analysis of XPath, and may return an error response, on the acquisition API call by the XPath on the eighth line in the user information application program illustrated in FIG. 3.

The service information is not limited to the one described in the above-mentioned embodiments, so long as it is the information capable of specifying the server apparatus 201 that is a target of determining whether the use of the attribute value of the user attribute information is allowed or not. For example, the service information may be an IP address, or server certificate data of the server apparatus 201.

In the above-mentioned embodiments, when the filter information involved with the user attribute information is stored in the filter information storage unit 406, the content display apparatus 101 determines whether or not the use of the attribute value of the user attribute information in the user information application program is allowed or not by using the filter information. However, the invention is not limited thereto. As in step S107 in FIG. 5, even in this case, the content display apparatus 101 may display the user interface screen for allowing the user to determine whether the use of the attribute value of the user attribute information in the user information application program is allowed or not on the display unit, and may determine whether the access to the attribute value of the user attribute information from the user information application program is allowed or not according to the operation input of the user through the operation input unit on the user interface screen. A flag indicating whether the user's confirmation is needed or not may be preliminarily contained in the filter information, and the content display apparatus 101 may refer to the flag upon determining whether the use of the attribute value of the user attribute information in the user information application program is allowed or not. When the flag indicates that the user's confirmation is needed, the above-mentioned user interface screen may be displayed.

In the third embodiment, when the filter information involved with the content-related information is stored in the filter information storage unit 406, the content display apparatus 101 determines whether or not the registration of the content-related information is allowed or not by using the filter information. However, the invention is not limited thereto. As in step S206 in FIG. 15, even in this case, the content display apparatus 101 may display the user interface screen for allowing the user to determine whether the registration of the content-related information is allowed or not on the display unit, and may determine whether the registration of the content-related information is allowed or not according to the operation input of the user through the operation input unit on the user interface screen. A flag indicating whether the user's confirmation is needed or not may be preliminarily contained in the filter information, and the content display apparatus 101 may refer to the flag upon determining whether the registration of the content-related information is allowed or not. When the flag indicates that the user's confirmation is needed, the above-mentioned user interface screen may be displayed.

In the fifth embodiment, the degree of preference in the preference information is represented by integers of "0" to "100". However, the invention is not limited thereto. The degree of preference may be a floating-point number, and the granularity is not limited thereto. The preference information is not limited to the one illustrated in FIG. 19. For example, if the degree of preference to the content other than the video image is not used, the preference information may not contain the media type. If the content display apparatus 101 is shared by plural users, the preference information may include user identification information for identifying each user. The preference information may define the genre in a hierarchical manner, and further, may define a sub-genre. The preference information may be configured to indicate the degree of preference to the genre described above. The preference information may indicate not only the genre but also a keyword, person, service (server apparatus), cost, and a degree of preference to a content length. The degree of preference may be calculated from simple statistic information of the operation history information, or may be calculated by utilizing a probability model such as Bayesian Network. The calculation algorithm of the degree of preference is not particularly limited.

In the second to fifth embodiments, goods and multimedia content may be ordered based upon the type of the goods or multimedia content in the content-related information. The ordering may be performed to each genre for each type of the goods and multimedia content. When the content-related information is metadata involved with each goods or each multimedia content, the content display apparatus 101 controls the display of the metadata by using the ordering as an alignment condition upon displaying the metadata on the display unit.

In the fifth embodiment, when the server apparatus 201 transmits the recommended goods list information to the content display apparatus 101 as metadata, the metadata may contain a degree of coincidence to the genre as a numerical value. Each genre is ordered according to the degree of coincidence. Thus, the content display apparatus 101 controls the display of the metadata by using the ordering as an alignment condition upon displaying the metadata on the display unit.

### Reference Signs List

- 101: CONTENT DISPLAY APPARATUS
- 201, 201A, 201B, 201C: SERVER APPARATUS
- 301: NETWORK
- 401: USER INFORMATION STORAGE UNIT
- 402: CONTENT RECEIVING UNIT
- 403: CONTENT PROCESSING UNIT
- 404: CONTENT DISPLAY CONTROL UNIT
- 405: USER INFORMATION EXTRACTING UNIT
- 406: FILTER INFORMATION STORAGE UNIT
- 407: USER INFORMATION OUTPUT CONTROL UNIT
- 408: INFORMATION FORMAT STORAGE UNIT
- 409: INFORMATION FORMAT OUTPUT UNIT
- 410: CONTENT-RELATED INFORMATION STORAGE UNIT
- 411: CONTENT-RELATED INFORMATION OUTPUT CONTROL UNIT
- 412: CONTENT ANALYZING UNIT
- 413: USER INFORMATION TRANSMITTING UNIT

## Claims

1. An information processing apparatus comprising:
a first storage to store user information containing a plurality of pieces of user attribute information;
a receiving unit configured to receive a first program, which is used for access to the user information by a unified process, from a server apparatus;
a first analyzing unit configured to analyze the received first program, and extract the user attribute information that is to be used;
a second storage to store accessibility information, indicating whether the access to the user attribute information is allowed or not, for each piece of the user attribute information and each attribute value that is a value of the user attribute information;
a determining unit configured to determine whether the use of the attribute value of the user attribute information is allowed or not by using the accessibility information of the extracted user attribute information;
an executing unit configured to execute the first program according to the result of the determination of the determining unit; and
an execution controller configured not to allow the executing unit to execute all or some of the first program so as to deny access to the attribute value of the user attribute information from the first program when it is determined that the use of the attribute value of the user attribute information is not allowed, but to allow the executing unit to execute the first program so as to allow the access to the attribute value of the user attribute information when it is determined that the use of the attribute value of the user attribute information is allowed.

2. The apparatus according to claim 1, wherein
the receiving unit receives, from a server apparatus connected to network, first content that includes: the first program; and content-related information involved with content, and
the information processing apparatus further includes:
a third storage to store the content-related information;
a processor to decode the content; and
a display controller to display the decoded content on a display unit.

3. The apparatus according to claim 2, wherein
the receiving unit receives, from the server apparatus, first content that includes: the first program; the content-related information; and a second program that requests a registration of the content-related information and that designates a timing of outputting the registered content-related information,
the information processing apparatus further includes an output controller configured to output the content-related information stored in the third storage at a specified timing,
the second program designates that the content-related information is output when second content is received from the other server apparatus,
the output controller outputs the content-related information stored in the third storage according to the designation of the second program when the receiving unit receives the second content from the other server apparatus, and
the display controller displays the output content-related information on the display unit.

4. The apparatus according to claim 3, further comprising a second analyzing unit configured to analyze the content, wherein
the output controller selects the content-related information stored in the content storage based upon the result of the analysis by the second analyzing unit and outputs the selected content-related information.

5. The apparatus according to claim 4, wherein
the content-related information is metadata involved with at least one of goods and multimedia content, and
the output controller outputs all or some of the metadata based upon the analysis by the second analyzing unit.

6. The apparatus according to claim 5, wherein
the user information includes the user attribute information that is preference information indicating a degree of preference of a user for at least one of the goods and the multimedia content, and
the information processing apparatus further includes a transmitting unit configured to transmit the preference information to the server apparatus that has transmitted the first content.

7. The apparatus according to claim 6, wherein
each genre of at least one of the goods and multimedia content is ordered in the metadata, and
the display controller controls the display of the metadata, which is the output content-related information, onto the display unit by using the ordering.

8. The apparatus according to claim 7, wherein
the preference information indicates a degree of preference of a user for each of the genres, and
the receiving unit receives the content-related information selected based upon the transmitted preference information from the server apparatus.

9. The apparatus according to claim 8, further comprising:
a fourth storage to store at least one of format information indicating a description format of the user information and revision information of the format information; and
an output unit configured to output at least one of the format information and the revision information to the first program.

10. The apparatus according to claim 9, wherein
in either one or both of: a case where the format information requested by the first program and the format information output from the output unit does not coincide with each other; and a case where the revision information requested by the first program and the revision information output from the output unit does not coincide with each other, the execution controller does not allow the executing unit to execute all or some of the first program so as to deny access to the attribute value of the user attribute information.
